# EUROPEAN PATENT APPLICATION

(11) **EP 1 348 986 A2**
(43) Date of publication of application: **01.10.2003**
(21) Application number: 03004287.3
(22) Date of filing: 27.02.2003
(51) Int. Cl.: G02B 6/00, F21V 8/00

(54) **Illuminating apparatus for image processing in measuring machines**

(30) Priority: 05.03.2002 JP 2002059531
(71) Applicant: Mitutoyo Corporation, Kanagawa 213-0012 (JP)
(72) Inventor: Tachibana, Shunsaku, Mitutoyo Corporation, Kawasaki, Kanagawa 213-0012 (JP); Matsumiya, Sadayuki, Mitutoyo Corporation, Kawasaki, Kanagawa 213-0012 (JP); Okabe, Kenji, Mitutoyo Corporation, Kawasaki, Kanagawa 213-0012 (JP)
(74) Representative: Hoffmann, Eckart, Dipl.-Ing.

(57) **Abstract**

An illuminating apparatus for image processing type measuring machines, capable of coping with a wide diversity of objects to be measured and enabling accurately imaging the object is provided. This illuminating apparatus applies the light to the object to be measured so as to enable determination of the size and shape of the object on the basis of an image of the same and includes light sources (121-124) and a plurality of optical fibers (13) receiving the light from the light sources at one of their input ends, outputting the light from their output ends toward the object and divided into at least three optical fiber groups (13R, 13B, 13G, 13W). A respective one of a red, a green and a blue color filter (14R, 14B, 14G) is inserted between the input ends of each of three optical fiber groups (13R, 13B, 13G, 13W) and the corresponding light sources.

## Description

This invention relates to an illuminating apparatus used to illuminate an object to be measured. In particular, the invention relates to an illuminating apparatus for an image processing type measuring machine adapted to determine the size and shape of an object on the basis of an image thereof obtained by an optical system.

Image processing type measuring machines adapted to optically image an object or a portion thereof whose size and shape is to be determined on the basis of the image thus obtained, for example a microscope, a projector, or a three-dimensional image measuring machine, are known. US-A-6,075,558, for instance discloses a CCD videoscope. In such measuring machines the illumination of the object to be measured plays an important role in obtaining an image of the object.

Besides a vertically downward illuminating system irradiating the object to be measured from substantially right above the object, a diagonal illuminating system irradiating the object in a direction inclined at a predetermined angle with respect to the axis of the imaging optical system, and a system irradiating through the object to be measured from a position substantially under the object are known as illuminating apparatuses for image processing type measuring machines.

A halogen lamp (white light) has heretofore been used generally as a light source for these illuminating systems. However, when the illuminating light is white light, it is difficult in some cases to detect edges of the object due to the diversity of the objects to be measured. For example, where the object to be measured is a printed pattern such as printed matter using a plurality of colors, the printed pattern does not have a stepped portion but has different colors only, so that the detection of edges of regions of different colors is difficult in some cases.

An illuminating apparatus having an LED (light-emitting diode) as a light source is also known (US-A-5,689,602). Even with LED's, however, the color is fundamentally limited, so that the problem of edge detection cannot always be solved. Moreover, the LED device itself is large. Therefore, even when LED's of different colors are arranged with varied light applied to the object to be measured, nonuniformity of the color distribution is liable to occur, and the object to be measured cannot be pictured clearly. Providing a multiplicity of LED's is difficult also for space reasons, and a problem with the brightness of illumination also arises in some cases.

From US-A-5,689,602 it is also known to use an optical fiber bundle to transmit the light from the light source to a half mirror which deflects the light into the optical axis of a CCD imaging system.

It is an object of the present invention to provide an illuminating apparatus capable of solving the above problems encountered in prior art apparatuses of this kind, and coping with the diversity of objects to be illuminated. Another object of the present invention to provide an illuminating apparatus suitable for image processing type measuring machines and allowing to obtain an accurate image of the object to be measured, and rarely having problems with space limitations.

These objects are achieved by an illuminating apparatus as claimed in claims 1 and 8, respectively. Preferred embodiments of the invention are subject-matter of the dependent claims.

The illuminating apparatus according to the invention is particularly, though not exclusively, suitable for image processing type measuring machines adapted to picture in a striking contrast not only an object having a stepped portion but also one without steps but with differently colored regions instead, for example, multicolored printed matter (printed patterns etc.), by varying the color of the light applied to the object.

In one embodiment, red, green and blue light is sent out from the optical fibers of respective optical fiber groups toward the object to be measured. Therefore, the color of the light applied to the object can be changed to a desired color by changing the quantity of the light radiated from the light source into each optical fiber group. Accordingly, this illuminating apparatus is suitable for a variety of different kinds of object to be measured, e.g., this apparatus can be applied not only to objects having a stepped portion but also to objects without a stepped portion but with differently colored regions instead. The apparatus makes it possible to accurately obtain images of such objects. Moreover, since the object and the light source are connected by optical fibers they can be separated from each other and thus the apparatus rarely has design problems when there are space limitations.

According to another embodiment, filters of different colors may be set in front of the input ends of the optical fibers by a filter change-over unit In this case colored light corresponding to the color of the filter which is respectively set is obtained. In this structure, a single light source serves the purpose, and, moreover, the optical fibers need not be divided into groups. This enables the illuminating apparatus to be manufactured easily at a relatively low cost.

Preferred embodiments of the present invention will be described in detail hereinafter with reference to the drawings, wherein:
Fig. 1 is a front view showing an image processing type measuring machine to which a first embodiment of the present invention is applied;
Fig. 2 is a bottom view of the first embodiment of the illuminating apparatus according to the present invention;
Fig. 3 is a front view of the first embodiment of the illuminating apparatus according to the present invention;
Fig. 4 is a bottom view of a second embodiment of the illuminating apparatus according to the present invention;
Fig. 5 is a bottom view of a third embodiment of the illuminating apparatus according to the present invention; and
Fig. 6 is a front view showing an image processing type measuring machine to which a fourth embodiment of the present invention is applied.

In the following description, the same or equivalent constituent parts of the embodiments will be designated by the same reference numerals, and the description of such parts will thereby be omitted or simplified.

### First Embodiment

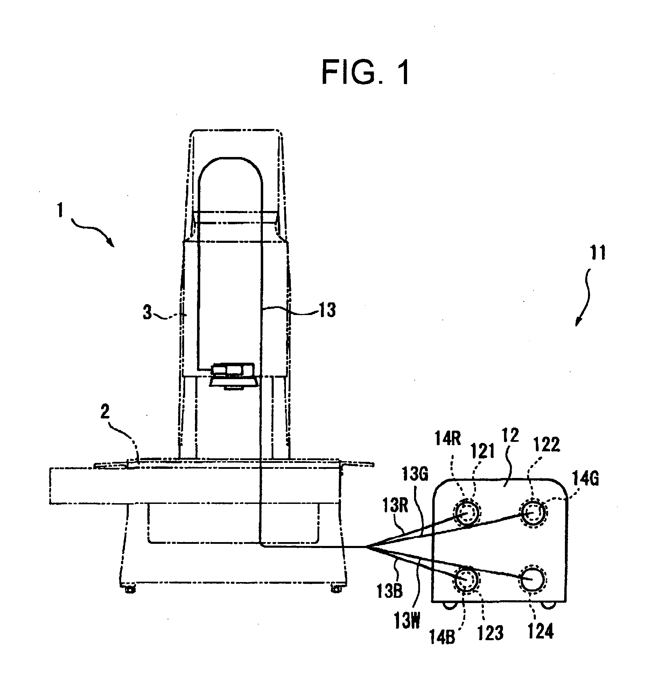

Fig. 1 is a front view showing an image processing type measuring machine to which a first embodiment is applied.

This measuring machine comprises a main unit 1, and an illuminating apparatus 11. The main unit 1 is provided with a stage 2 on which the object to be measured is placed, and an optical system 3 for taking an image of the object placed on the stage 2, and is adapted to determine the size and shape of the object or a portion of it on the basis of the thus obtained image.

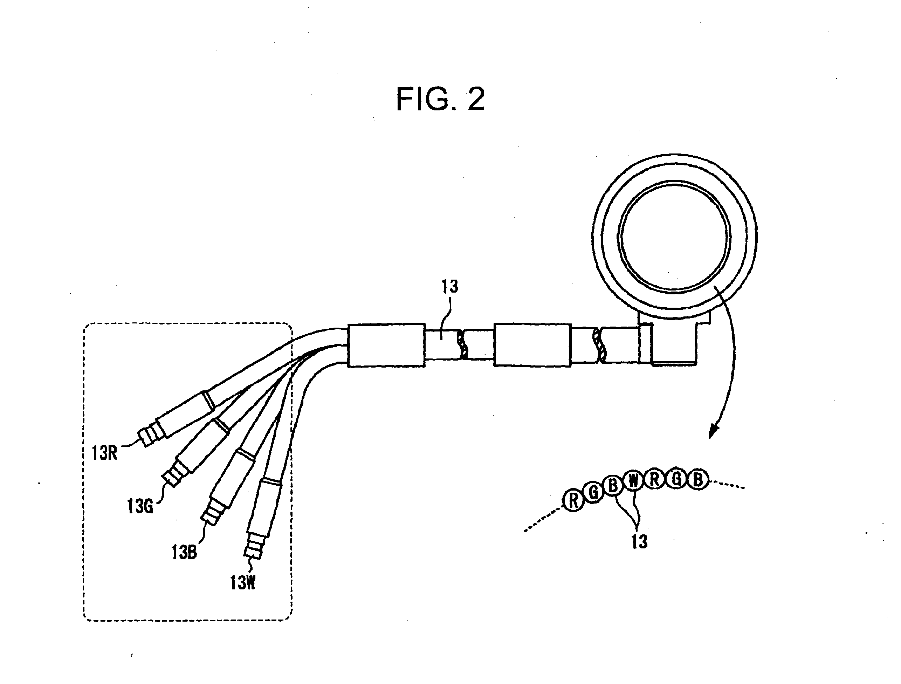

The illuminating apparatus 11 is provided with a light source unit 12, optical fibers 13 divided into a plurality of groups, four groups in this embodiment. The optical fibers 13 receive the light from the light source unit 12 at their respective input ends (the ends surrounded by a broken line in Figs. 2, 4 and 5) and output the light from their respective output ends toward the object to be measured. Color filters 14R, 14G, 14B of red (R), green (G), blue or bluish purple (B) are inserted between the input ends of the optical fiber groups 13R, 13G,and 13B on the one hand and light source unit 12 on the other hand. No filter is inserted between the optical fiber group 13W and the light source unit 12 (the light from the light source is introduced as it is into the optical fiber group 13W).

The light source unit 12 has light sources 121, 122, 123, 124 corresponding to the optical fiber groups 13R, 13G, 13B, 13W. Each of the light sources 121, 122, 123, 124 is made of a white light emitting halogen lamp so that the brightness of the light can be regulated by a brightness regulating device (not shown).

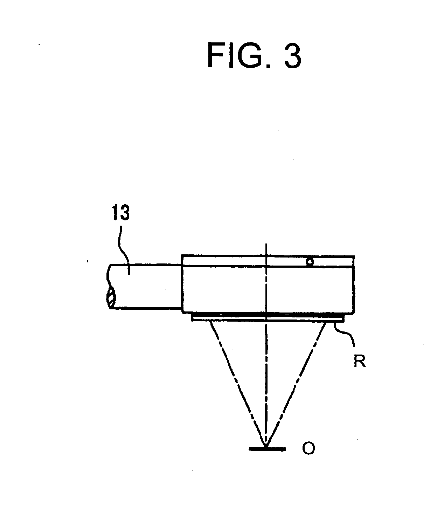

As shown in Fig. 2, the light output ends of the optical fibers 13 are arranged annularly and, as shown in Fig. 3, their optical axes are inclined so that they converge in one point. R in Fig. 3 denotes the annular arrangement of the light output ends and O denotes the illuminated object to be measured. In this arrangement, the optical fibers 13 adapted to output the light of a respective color are arranged in a predetermined order alternately along a circle. Namely, optical fibers 13 (one optical fiber 13 each of optical fiber groups 13R, 13G, 13B, 13W) adapted to output the light of R (red), G (green), B (blue or bluish purple), W (white) respectively are arranged in this order of color repeatedly along a circle.

In such an arrangement, the red light, green light, blue or bluish purple light and white light is sent out from each optical fiber group 13R, 13G, 13B, 13W toward the object to be measured. Therefore, the color of the light applied to the object to be measured can be changed to an arbitrary color by controlling the brightness of the light from the light sources 121, 122, 123, 124. Accordingly, the illuminating apparatus can cope with a diversity of objects to be measured. Namely, the illuminating apparatus can be applied not only to an object having a stepped portion but also to an object not having a stepped portion but having differently colored regions. This enables images of these objects to be taken accurately, and enables the changing of colors thereof to be done by a simple construction and, moreover, with ease.

Furthermore, the object to be measured and the light source unit 12 are connected through the optical fibers 13 and so they can be widely separated, so that the illuminating apparatus is rarely kept from operating due to space restrictions.

Since the light output ends of the optical fibers 13 are arranged so that the optical axes of the optical fibers converge in one point, the light is applied to the object or the portion of thereof to be measured from positions surrounding the object, and also in the diagonal direction. This enables edges of differently colored regions of the object material to be imaged clearly.

Since optical fibers 13 adapted to output the light of different colors are arranged in alternating order red, green and blue light is applied from points all along the circumference of a circular line to the object. Therefore, even when there is an obstacle in one direction, there is no shadow on the object, so that uniform illumination of the object can be attained.

The optical fibers 13 in the first embodiment are arranged so that optical fibers outputting light of respective colors alternate with each fiber repeatedly along the circle. The optical fibers 13 may also be arranged so that several optical fibers 13 outputting the light of a respective color are arranged together in groups, these groups alternating repeatedly along the circle. For example, the optical fibers 13 may be arranged by setting two optical fibers 13 outputting R (red) light adjacent to each other, then two optical fibers 13 outputting G (green) light, and thereafter two optical fibers 13 outputting B (blue or bluish purple) light, and so on.

In the first embodiment, a filter of a color other than R (red), G (green) and B (blue or bluish purple) may be inserted between the optical fiber group 13W and the light source 124.

### Second Embodiment

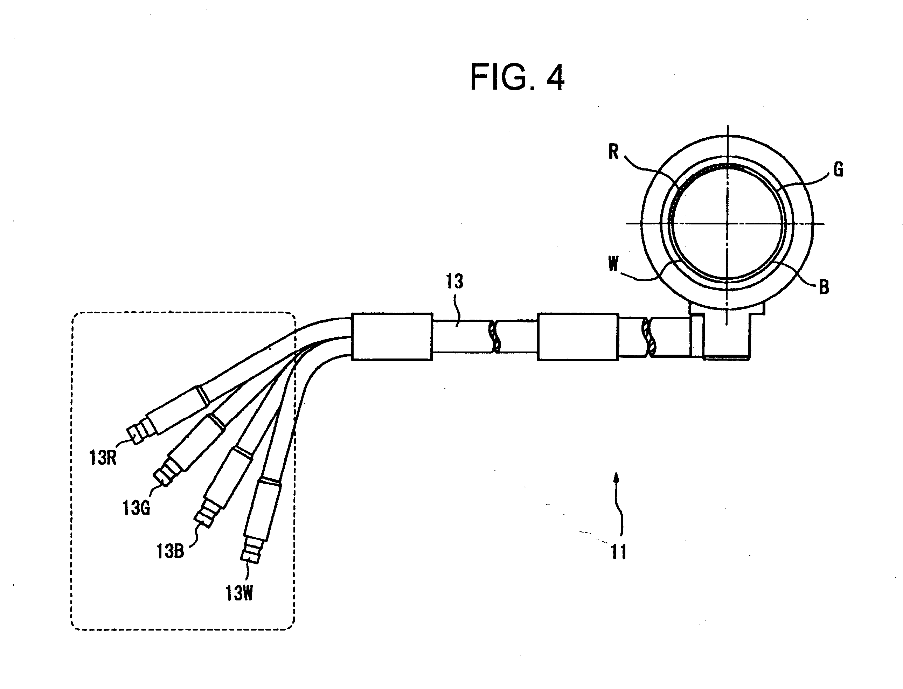

Fig. 4 shows a second embodiment of the illuminating apparatus according to the present invention.

The illuminating apparatus 11 of the second embodiment of the present invention is different from that of the first embodiment in the arrangement of the light output ends of the optical fibers 13. Namely, in the second embodiment the groups 13R, 13G, 13B, and 13W of optical fibers 13 outputting the light of the four different colors, respectively, are arranged so that the fibers of each group (each color) are all together forming a respective one of four predetermined angular sections (each of which extends over a range of 90 degrees), i.e. four quarters of the circle. The four quarters denoted R, G, B and W in Fig. 4 represent the light output ends of the optical fiber group 13R, 13G, 13B and 13W, respectively.

In such a structure, in which the optical fibers 13 of groups 13R, 13G, 13B, 13W are arranged in predetermined sections, the operation for arranging the optical fibers 13 can be carried out easily, and the cost of manufacturing the illuminating apparatus can be reduced to a lower level compared to that of the first embodiment.

### Third Embodiment

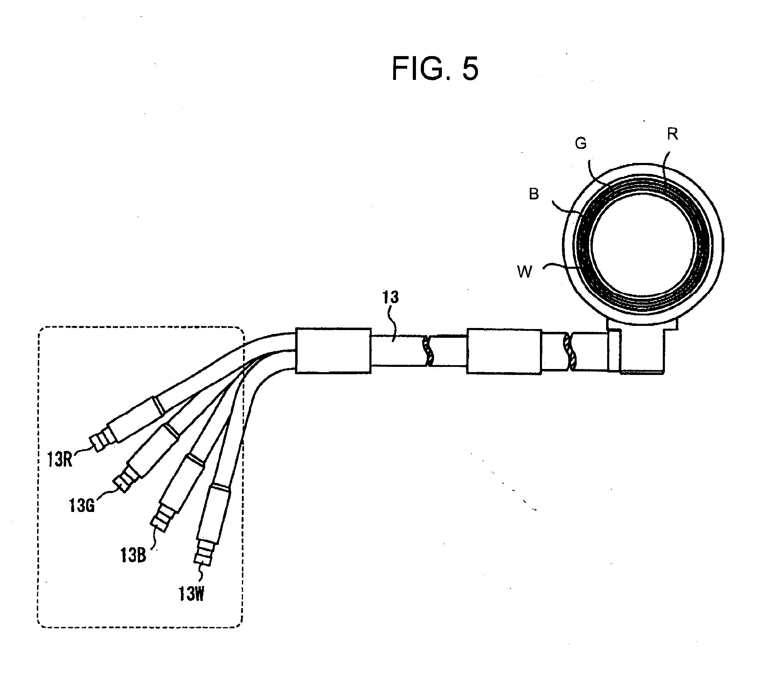

Fig. 5 shows a third embodiment of the illuminating apparatus according to the present invention.

The illuminating apparatus 11 of the third embodiment of the present invention is different from that in the first embodiment in the arrangement of the light output ends of the optical fibers 13. Namely, in the third embodiment the optical fibers 13 of each group 13R, 13G, 13B, 13W adapted to output the light of different colors, respectively, are arranged in a respective circle for each color, so that the four circles are concentric. In this embodiment, optical fibers 13 outputting red light, optical fibers 13 outputting green light, optical fibers 13 outputting blue or bluish purple light and optical fibers 13 outputting white light are arranged in this order from the innermost circle toward the periphery. Hence, the four circles denoted R, G, B and W in Fig. 5 represent the light output ends of the optical fiber group 13R, 13G, 13B and 13W, respectively.

In such a structure, rings of the optical fibers 13 each outputting the light of a different color R, G, B, W are arranged concentrically, so that a very bright illumination of an object can be attained.

### Fourth Embodiment

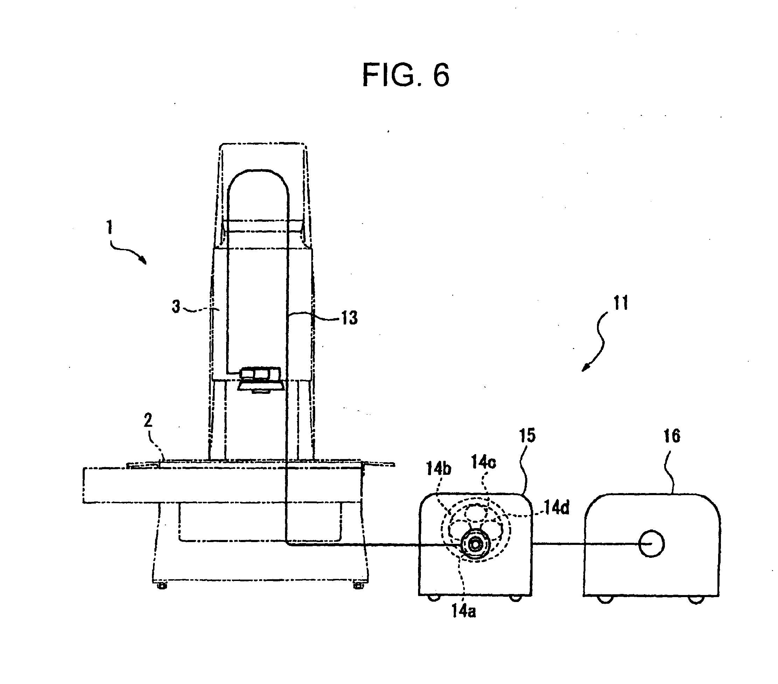

Fig. 6 shows an image processing type measuring machine using a fourth embodiment of the present invention.

The illuminating apparatus 11 of the fourth embodiment is different from that of the first embodiment in that the input ends of optical fibers 13 are not divided into groups, and in that a single light source 16 is provided. Namely, in the illuminating apparatus of the fourth embodiment a plurality of optical fibers 13 receive the light from the light source 16 at their input ends and output the light from their output ends toward the object to be measured. A filter change-over unit 15 inserted is between the light source 16 and the input ends of the optical fibers and is adapted to switch color filters 14a, 14b, 14c, 14d of a plurality of colors from one to another.

In this embodiment, the color filters 14a, 14b, 14c, 14d provided are R (red), G (green), B (blue or bluish purple) and Y (yellow) filters.

When one of a plurality of different color filters 14a, 14b, 14c, 14d is set in front of the input ends of the optical fibers 13 by operating the filter change-over unit 15, light of the color of the switched filter is obtained. Moreover, in this structure, one light source 16 serves the purpose, and the optical fibers 13 need not be divided into groups. Therefore, the manufacturing of the illuminating apparatus can be done easily and at a lower cost compared to that of the first embodiment.

In the fourth embodiment, the colors of the color filters 14a, 14b, 14c, 14d need not be R (red), green (G), B (blue or bluish purple) and Y (yellow), rather filters of arbitrary colors may be provided.

Further, if the color filters are made exchangeable, the filters can be changed to filters of colors which the user desires. When any one of these color filters is non-colored, white light can be applied to an object material.

In this fourth embodiment the output ends of the optical fibers 13 may be arranged to form one or a plurality of concentric circles similar to the first and third embodiments, i.e., such that the optical axes of the optical fibers converge in one point.

### Modifications

Although, the illumination light of an arbitrary color is obtained in the above-described embodiments by controlling the brightness of the light sources, the quantity of light from one or more of the light sources for the optical fiber groups 13R, 13G, 13B, 13W may be controlled in a different way. For example, a light-quantity restricting filter or a diaphragm may be provided.

Although the input ends of the optical fibers 13 are divided into four groups in the first to third embodiments, these input ends may also be divided into a number larger or smaller than four. For example, the input ends of the optical fibers 13 may be divided into five groups, and filters of R (red) color, G (green) color, B (blue or bluish purple) color and a color other than these colors may then be inserted.

In the above-described embodiments, the light output ends of the optical fibers 13 are arranged circularly so that the optical axes of the optical fibers 13 converge in one point. The illuminating apparatus may also be formed so that the angle at which the illumination light is applied to the object to be measured can be varied, by providing the optical fibers in a structure so that the angle of the light output ends thereof can be varied. When the illuminating apparatus is formed in this manner, the light can be applied to an object at an optimum angle with respect to the height and depth of projections and recesses on the surface.

Although the light output ends of the optical fibers 13 in the above-described embodiments are arranged circularly so that the illumination light is applied from positions around and diagonally with respect to the object to be measured, the illuminating apparatus according to the present invention is not limited to such apparatuses but can be applied to the downward illumination or the transmissive illumination. In the downward illumination or the transmissive illumination, it is desirable that the output ends of the optical fibers outputting the light of different colors be arranged at random.

The present invention can be applied not only to such an image processing type measuring machine as described in the above embodiments but also to some other types of optical measuring machines, such as a microscope, a projector and a three-dimensional image measuring machine.

There is every reason to expect that the illuminating apparatus for image processing type measuring machines according to the present invention described above can cope with a wide diversity of objects to be measured and enable accurate imaging of an object material, and that the apparatus be rarely restricted by a space.

## Claims

1. An illuminating apparatus for applying light to an object to be measured so as to enable determination of the size and shape of the object, comprising:
a light source unit (12); and
a plurality of optical fibers (13) each having an input end and an output end, the optical fibers (13) receiving at their input ends the light from the light source unit (12) and outputting the light from their output ends toward the object;
wherein the optical fibers (13) are divided at their input ends into at least three optical fiber groups (13R, 13B, 13G, 13W), and a respective one of filters (14R, 14B, 14G) of a red color, a green color and a blue color is inserted between the input ends of each of three of said at least three optical fiber groups and the light source unit (12).

2. The apparatus according to Claim 1, further comprising means for controlling the brightness of the light entering the input ends of one optical fiber group independent from that entering the input ends of the other optical fiber groups (13R, 13B, 13G, 13W).

3. The apparatus according to Claim 1 or 2, wherein said light source unit (12) comprises a separate light source (121-124) for each of said optical fiber groups (13R, 13B, 13G, 13W) so that the brightness of the light from each light source can be controlled.

4. The apparatus according to Claim 1, 2 or 3, wherein the light output ends of the optical fibers (13) are arranged annularly and inclined relative to one another so that the optical axes of the optical fibers (13) converge in one point.

5. The apparatus according to Claim 4, wherein the output ends of the plurality of optical fibers (13) outputting the light of different colors are arranged alternately along a circle, one or more fibers of one color followed by one or more fibers of another color.

6. The apparatus according to Claim 4, wherein the light output ends of all optical fibers (13) belonging to the same optical fiber group (13R, 13B, 13G, 13W) are positioned in a predetermined divisional section of a circle.

7. The apparatus according to Claim 4, wherein the light output ends of all optical fibers (13) belonging to the same optical fiber group (13R, 13B, 13G, 13W) are positioned on one circle, the multiple circles of different optical fiber groups being concentric.

8. An illuminating apparatus for applying light to an object to be measured so as to enable determination of the size and shape of the object, comprising:
a light source (16),
a plurality of optical fibers (13) each having an input end and an output end, the optical fibers (13) receiving at their input ends the light from the light source (16) and outputting the light from their output ends toward the object to be measured, and
a filter change-over unit (15) inserted between the light source (16) and the incident ends of the optical fibers (13) and adapted to switch from one filter of one color to each of one or more other filters (14R, 14B, 14G) of a respective different color.

9. Use of the apparatus according to any one of the preceding claims in an image processing type measuring machine in which the size and shape of an object to be measured is determined on the basis of an image of the object as illuminated by the illumination apparatus (11).
